# EUROPÄISCHE PATENTSCHRIFT

(11) **EP 1 866 521 B1**
(45) Veröffentlichungstag und Bekanntmachung des Hinweises auf die Patenterteilung: **19.10.2016**
(21) Anmeldenummer: 06725465.6
(22) Anmeldetag: 31.03.2006
(51) Int. Cl.: F01K 23/10

(54) **VERFAHREN ZUM STARTEN EINER GAS- UND DAMPFTURBINENANLAGE**
PROCESS FOR STARTING A GAS AND STEAM TURBINE PLANT
PROCÉDÉ POUR DÉMARRER UNE INSTALLATION À TURBINES À GAZ ET À VAPEUR

(30) Priorität: 05.04.2005 EP 05007416
(43) Veröffentlichungstag der Anmeldung: 19.12.2007
(73) Patentinhaber: Siemens Aktiengesellschaft, 80333 München (DE)
(72) Erfinder: GOBRECHT, Edwin, 40885 Ratingen (DE); NEWALD, Rainer, 91052 Erlangen (DE); SCHMID, Erich, 91080 Marloffstein (DE)
(86) Internationale Anmeldenummer: PCT/EP2006/061217
(87) Internationale Veröffentlichungsnummer: WO 2006/106075

(56) Entgegenhaltungen:
- EP-A- 1 072 760
- DE-A1- 2 332 180
- DE-A1- 19 736 888
- US-A- 4 028 884
- PATENT ABSTRACTS OF JAPAN Bd. 009, Nr. 098 (M-375), 27. April 1985 (1985-04-27) & JP 59 221410 A (HITACHI SEISAKUSHO KK), 13. Dezember 1984 (1984-12-13)
- PATENT ABSTRACTS OF JAPAN Bd. 008, Nr. 203 (M-326), 18. September 1984 (1984-09-18) & JP 59 093907 A (TOSHIBA KK; others: 01), 30. Mai 1984 (1984-05-30)

## Beschreibung

Die vorliegende Erfindung betrifft ein Verfahren zum Starten einer Gas- und Dampfturbinenanlage und insbesondere ein Verfahren für einen Schnellstart einer derartigen Anlage.

Ein solches Verfahren ist z.B. in Dokument JP-A-59221410 offenbart. In einer Gasturbinenanlage wird ein gasförmiger oder flüssiger Brennstoff, beispielsweise Erdgas oder Erdöl, mit verdichteter Luft vermischt und verbrannt. Die unter Druck stehenden Verbrennungsabgase werden der Turbine der Gasturbinenanlage als Arbeitsmedium zugeführt. Das Arbeitsmedium versetzt die Turbinen unter Entspannung in Rotation, wobei thermische Energie in mechanische Arbeit, nämlich die Rotation der Turbinenwelle, umgewandelt wird. Beim Austritt des entspannten Arbeitsmediums aus der Gasturbinenanlage weist dieses typischerweise noch eine Temperatur von 500 - 600 ° Celsius auf.

In einer Gas- und Dampfturbinenanlage wird das entspannte Arbeitsmedium, auch Rauchgas genannt, aus der Gasturbinenanlage dazu genutzt, Dampf zum Antreiben einer Dampfturbine zu erzeugen. Dazu wird das Arbeitsmedium einem der Gasturbinenanlage abgasseitig nachgeschalteten Abhitzedampferzeuger zugeführt, in dem Heizflächen in Form von Rohren oder Rohrbündeln angeordnet sind. Die Heizflächen sind wiederum in einen Wasser-Dampf-Kreislauf der Dampfturbinenanlage geschaltet, welcher mindestens eine zumeist jedoch mehrere Druckstufen aufweist. Die Druckstufen unterscheiden sich dabei dadurch voneinander, dass das den Heizflächen zur Dampferzeugung zugeführte Wasser verschiedene Druckniveaus aufweist. Eine Gas- und Dampfturbinenanlage mit einem lediglich eine Druckstufe aufweisenden Wasser-Dampf-Kreislauf ist in DE 197 36 888 A1 beschrieben, eine mit drei Druckstufen, nämlich einer Hochdruckstufe, eine Mitteldruckstufe und eine Niederdruckstufe, in DE 100 04 187 C1.

Zum Starten einer Gas- und Dampfturbinenanlage wird derzeit üblicherweise die Gasturbinenanlage gestartet und das entspannte Arbeitsmedium dem Abhitzedampferzeuger der Dampfturbinenanlage zugeführt. Der im Abhitzedampferzeuger erzeugte Dampf wird jedoch zunächst nicht dem Turbinenteil der Dampfturbinenanlage zugeführt sondern wird über Umleitstationen an der Turbine vorbeiführt und direkt einem Kondensator zugeführt, welcher den Dampf zu Wasser kondensiert. Das Kondensat wird dann wieder als Speisewasser dem Dampferzeuger zugeführt. In manchen Ausführungsvarianten von Gas- und Dampfturbinenanlagen wird der umgeleitete Dampf auch der Atmosphäre zugeführt.

Erst dann, wenn bestimmte Dampfparameter in den Dampfleitungen des Wasser-Dampfkreislaufes beziehungsweise in den zu dem Turbinenteil der Gasturbinenanlage führenden Dampfleitungen, beispielsweise bestimmte Dampfdrücke und -temperaturen, eingehalten sind, wird die Dampfturbine zugeschaltet. Das Einhalten dieser Dampfparameter soll mögliche Spannungen in dickwandingen Bauteilen auf einem niedrigen Niveau halten.

Nach dem Anfahren der Gasturbinenanlage erfolgt ein Leistungsanstieg, der zu einem Druckanstieg im Dampfsystem führt. Maßgeblich für den Lastgradienten, mit dem die Gasturbinenanlage angefahren wird, das heißt die Leiststeigerung der Gasturbinenanlage pro Zeiteinheit, hängt maßgeblich von der Ausführung und der Konstruktionsweise des Abhitzedampferzeugers sowie den konstruktiven Limitierungen innerhalb der Dampfturbine ab. Mit Ansteigen der Gasturbinenlast und damit der Temperatur bzw. des Volumenstroms des von der Gasturbinenanlage abgegeben Abgases werden auch die Dampftemperatur und der Druck im Dampfsystem erhöht.

Vor dem Start der Dampfturbine wird die Gasturbine in der Regel so lange auf einer bestimmten Teillast gehalten, bis sich stationäre Zustände in der Gasturbinenanlage und im Dampfsystem eingestellt haben. Sobald eine stabile Dampfproduktion erreicht ist, wird der im Dampfsystem befindliche Dampf auf die Dampfturbine geleitet, wodurch die Dampfturbine beschleunigt wird. Die Turbinendrehzahl wird dann auf Nenndrehzahl gesteigert. Nach erfolgter Synchronisation des mit der Dampfturbine gekoppelten Generators mit dem Stromnetz, oder bei Einwellenanlagen nach dem Einkuppeln der automatischen Überholkupplung, wird die Dampfturbine durch vermehrte Dampfzufuhr weiter belastet. Die Umleitstationen schließen dabei mehr und mehr, um den Dampfdruck in etwa konstant zu halten und Niveauschwankungen im Abhitzedampferzeuger zu minimieren.

Sobald die Umleitstationen geschlossen sind und der im Abhitzedampferzeuger produzierte Dampf vollständig auf die Dampfturbine geleitet wird, erfolgt bei höherer Leistungsanforderung der nun im Gas- und Dampfturbinenbetrieb arbeitenden Anlage ein weiteres Steigern der Gasturbinenleistung.

Definitionsgemäß ist der Startvorgang Gas- und Dampfturbinenanlage erst beendet, wenn die Gasturbine die Grundlast erreicht hat und alle Umleitstationen geschlossen sind.

Ziel der vorliegenden Erfindung ist es, ein Verfahren zum Starten einer Gas- und Dampfturbinenanlage zur Verfügung zu stellen, welches einen schnelleren Startvorgang als das eingangs beschriebene Verfahren ermöglicht.

Dieses Ziel wird durch ein Verfahren zum Starten einer Gas- und Dampfturbinenanlage nach Anspruch 1 erreicht. Die abhängigen Ansprüche enthalten vorteilhafte Ausgestaltungen des Verfahrens.

Erfindungsgemäß wird ein Verfahren zum Starten einer Gas- und Dampfturbinenanlage, insbesondere zum Schnellstarten einer Gas- und Dampfturbinenanlage, welche eine Gasturbinenanlage mit mindestens einer Gasturbine sowie eine Dampfturbinenanlage mit mindestens einer Dampfturbine und mindestens einem Dampfsystem aufweist und in der die Abhitze eines in der Gasturbine entspannenden Arbeitsmediums dem Dampfsystem zum Erzeugen von die Dampfturbine antreibendem Dampf zugeführt wird, zur Verfügung gestellt.

Im erfindungsgemäßen Verfahren wird beim Starten zuerst die Gasturbine gestartet, bevor die Dampfturbine gestartet wird. Die Dampfturbine wird dann bereits bei Vorliegen des ersten Dampfes im Dampfsystem gestartet und mit Dampf beaufschlagt.

Im erfindungsgemäßen Verfahren wird die Dampfturbine möglichst früh gestartet und mit dem ersten Dampf aus dem Abhitzedampferzeuger beschleunigt, ohne auf stationäre Zustände im Dampfsystem zu warten. Diese Maßnahme ermöglicht es, den Startvorgang der Gas- und Dampfturbinenanlage erheblich zu verkürzen.

Im Unterschied zur üblichen Anfahrweise kann die Dampftemperatur im Dampfsystem beim Starten der Dampfturbine unter der Materialtemperatur der Dampfturbine beziehungsweise ihres Ge-häuses liegen. Das frühe Zuleiten des Dampfes zur Dampfturbine kann daher zu einer Abkühlung der Bauteile und zu thermischen Spannungen führen. Eine gewissen Kompensation kann aber erreicht werden, wenn bei der anschließenden Steigerung der Dampftemperaturen die Gradienten entsprechend gering gehalten werden.

Vorteilhafterweise ist die Abstimmung des Dampfsystems beim Startvorgang derart gewählt, dass der Dampfdruck kontinuierlich steigt. Dies kann beispielsweise dadurch erreicht werden, dass eine Dampfumleitstation des Dampfsystems nur so weit geöffnet wird, dass mit einem Teil der Abwärme des Arbeitsmediums eine zum Beschleunigen und/oder Synchronisieren der Dampfturbine benötigte Mindestdampfmenge erzeugt und mit dem restlichen Teil der Abwärme des Arbeitsmediums eine Drucksteigerung im Dampfsystem herbeigeführt wird.

Außer zu einer Drucksteigerung im Dampfsystem führt die vergleichsweise geringe Öffnung der Dampfumleitestation zu einer reduzierten Dampfproduktion im Abhitzedampferzeuger. Damit wird die Wärmelast zum Kondensator reduziert, und die Umleitestation kann schneller schließen.

In einer besonderen Ausgestaltung des erfindungsgemäßen Verfahrens wird die Umleitestation gar nicht geöffnet.

Das erfindungsgemäße Verfahren ist so ausgestalt, dass die Gasturbinenanlage während des gesamten Startvorgangs eine Laststeigerung erfährt, insbesondere bis die Grundlast erreicht ist. Mit anderen Worten, es wird darauf verzichtet, die Gasturbinenanlage auf einer bestimmten Teillast zu halten und abzuwarten, bis sich stationäre Zustände in der Gasturbinenanlage und im Dampfsystem der Dampfturbinenanlage eingestellt haben. Auch diese Maßnahme führt zu einer Verkürzung der Startzeit der Gasturbinenanlage und ermöglich so einen Schnellstart.

Die Laststeigerung der Gasturbinenanlage erfolgt mit maximaler Lastrampe, das heißt es erfolgt eine maximale Steigerung der Gasturbinenleistung pro Zeiteinheit.

Vorzugsweise wird die Gas- und Dampfturbinenanlage während des Hochfahrens der Gasturbinenanlage auf Grundlast in den Gas- und Dampfturbinenbetrieb umgeschaltet, so dass bei Erreichen der Gasturbinengrundlast der definitionsgemäße Startvorgang beendet ist. Das Umschalten in den Gas- und Dampfturbinenbetrieb kann insbesondere das Synchronisieren eines mit der Dampfturbine gekoppelten Generators mit dem Netz oder bei Einwellenanlagen das Einkuppeln der automatischen Überholkuppelung beinhalten.

Das beschriebene erfindungsgemäße Verfahren zum Starten einer Gas- und Dampfturbinenanlage verkürzt die Anfahrzeit der Anlage beträchtlich. Es ist eine Reduzierung der Startdauer gegenüber dem eingangs beschriebenen Verfahren auf etwa 50 % zu erzielen. Ein Gas- und Dampfturbinenbetreiber kann daher auf kurzfristige Anforderungen sehr flexibel reagieren, wodurch sich die Erlöse aus dem Stromerkauf erhöhen lassen. Zudem steigt durch die frühe Dampfübernahme der Dampfturbine und die reduzierte Wärmelast im Kondensator, die zu geringeren Leistungsverlusten führt, der gemittelte Wirkungsgrad der Gas- und Dampfturbinenanlage, was insbesondere bei häufigen Starts erheblich ins Gewicht fällt und die Wirtschaftlichkeit der Anlage steigert.

Die geringere Dampfproduktion beim erfindungsgemäßen Verfahren zum Starten einer Gas- und Dampfturbinenanlage ermöglicht es zudem, kleinere Umleitstationen zu installieren und so die Investitionskosten zu verringern.

Das beschriebene, einen Schnellstart einer Gas- und Dampfturbinenanlage ermöglichende Startverfahren kann im wesentlichen durch Softwarenmodifikationen realisiert werden. Es ist daher möglich, auch bestehende Gas- und Dampfturbinenanlagen auf das erfindungsgemäße Startverfahren umzustellen.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

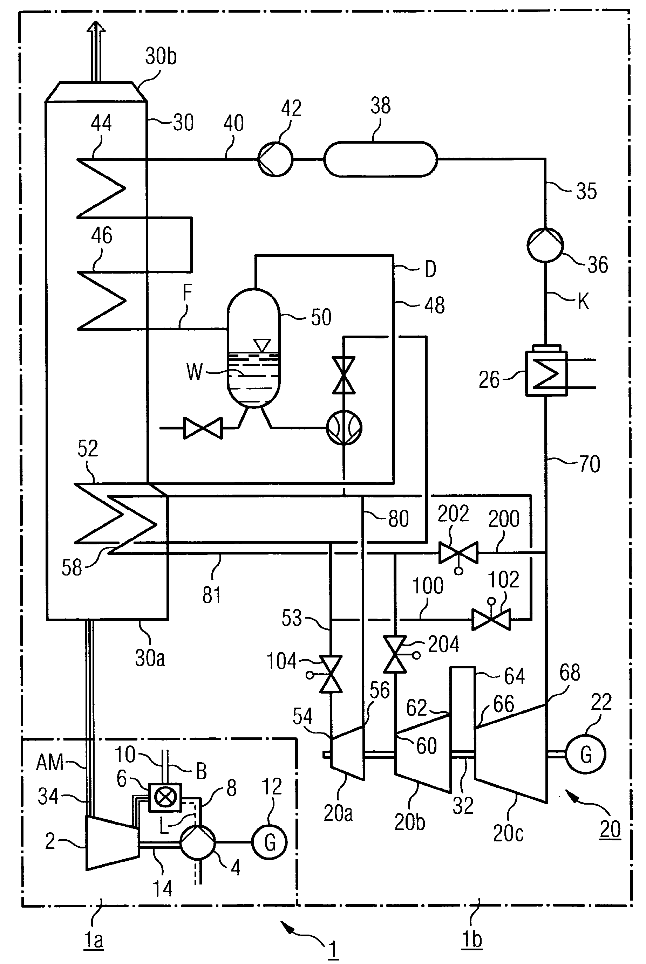

Figur 1 zeigt ein Schemadiagramm für eine Gas- und Dampfturbinenanlage.

Die in Figur 1 schematisch dargestellte Gas- und Dampfturbinenanlage 1 umfasst eine Gasturbinenanlage 1a sowie eine Dampfturbinenanlage 1b. Die Gasturbinenanlage 1a ist mit einer Gasturbine 2, einem Verdichter 4 sowie wenigstens einer zwischen den Verdichter 4 und die Gasturbine 2 geschalteten Brennkammer 6 ausgestattet. Mittels des Verdichters 4 wird Frischluft L angesaugt, verdichtet, und über die Frischluftleitung 8 einem oder mehreren Brennern der Brennkammer 6 zugeführt. Die zugeführte Luft wird mit über eine Brennstoffleitung 10 zugeführtem flüssigen oder gasförmigen Brennstoff B gemischt und das Gemisch entzündet. Die dabei entstehenden Verbrennungsabgase bilden das Arbeitsmedium AM der Gasturbinenanlage 1a, welches der Gasturbine 2 zugeführt wird, wo es unter Entspannung Arbeit leistet und eine mit der Gasturbine 2 gekoppelte Welle 14 antreibt. Die Welle 14 ist außer mit der Gasturbine 2 auch mit dem Luftverdichter 4 sowie einem Generator 12 gekoppelt, um diese anzutreiben. Das entspannte Arbeitsmedium AM wird über eine Abgasleitung 34 an einen Abhitzedampferzeuger 30 der Dampfturbinenanlage 1b abgeführt.

Im Abhitzedampferzeuger 30 wird das von der Gasturbine 1a mit einer Temperatur von ca. 500-600° Celsius ausgegebenen Arbeitsmedium zum Erzeugen und Überhitzen von Dampf verwendet.

Die Dampfturbinenanlage 1b umfasst neben dem Abhitzedampferzeuger 30, der insbesondere als Zwangsdurchlaufssystem ausgebildet sein kann, eine Dampfturbine 20 mit Turbinenstufen 20a, 20b, 20c und einen Kondensator 26. Der Abhitzedampferzeuger 30 und der Kondensator 26 bilden zusammen mit Kondensatleitungen beziehungsweise Speisewasserleitungen 35, 40 sowie mit Dampfleitungen 48, 53, 64, 70, 80, 100 ein Dampfsystem, welches zusammen mit der Dampfturbine 20 einen Wasser-Dampf-Kreislauf bildet.

Wasser aus einem Speisewasserbehälter 38 wird mittels einer Speisewasserpumpe 42 einem Hochdruckvorwärmer 44, auch Economizer genannt, zugeführt und von dort an einen ausgangsseitig mit dem Economizer 44 verbundenen, für einen Durchlaufbetrieb ausgelegten Verdampfer 46 weitergeleitet. Der Verdampfer 46 ist seinerseits ausgangsseitig über eine Dampfleitung 48, in die ein Wasserabscheider 50 geschaltet ist, an einen Überhitzer 52 angeschlossen. Über eine Dampfleitung 53 ist der Überhitzer 52 ausgangsseitig mit dem Dampfeingang 54 der Hochdruckstufe 20a der Dampfturbine 20 verbunden.

In der Hochdruckstufe 20a der Dampfturbine 20 treibt der vom Überhitzer 52 überhitzte Dampf die Turbine an, bevor er über den Dampfausgang 56 der Hochdruckstufe 20a an einen Zwischenüberhitzer 58 weitergegeben wird.

Nach der Überhitzung im Zwischenüberhitzer 58 wird der Dampf über eine weitere Dampfleitung 81 an den Dampfeingang 60 der Mitteldruckstufe 20b der Dampfturbine 20 weitergeleitet, wo er die Turbine antreibt.

Der Dampfausgang 62 der Mitteldruckstufe 20b ist über eine Überströmleitung 64 mit dem Dampfeinlass 66 der Niederdruckstufe 20c der Dampfturbine verbunden. Nachdem Durchströmen der Niederdruckstufe 20c und dem damit verbundenen Antrieben der Turbine wird der abgekühlte und entspannte Dampf über den Dampfausgang 68 der Niederdruckstufe 20c an die Dampfleitung 70 ausgegeben, die ihn zum Kondensator 26 führt.

Der Kondensator 26 wandelt den eingehenden Dampf in Kondensat um und gibt das Kondensat über die Kondensatleitung 35 mittels einer Kondensatpumpe 36 an den Speisewasserbehälter 38 weiter.

Neben den bereits genannten Elementen des Wasser-DampfKreislaufes umfasst dieser außerdem eine Bypassleitung 100, die sog. Hochdruckumleitung, die von der Dampfleitung 53 abzweigt, bevor diese den Dampfeinlass 54 der Hochdruckstufe 20a erreicht. Die Hochdruckumleitung 100 umgeht die Hochdruckstufe 20a und mündet in die Zuleitung 80 zum Zwischenüberhitzer 58. Ein weitere Bypassleitung, die sog. Mitteldruckumleitung 200, zweigt von der Dampfleitung 81, bevor diese in den Dampfeinlass 60 der Mitteldruckstufe 20b mündet. Die Mitteldruckumleitung 200 umgeht sowohl die Mitteldruckstufe 20b als auch die Niederdruckstufe 20c und mündet in die zum Kondensator 26 führende Dampfleitung 70.

In die Hochdruckumleitung 100 und die Mitteldruckumleitung 200 sind ein Absperrventile 102, 202 eingebaut, mit welchem sie sich absperren lassen. Ebenso befinden sich Absperrventile 104, 204 in der Dampfleitung 53 bzw. in der Dampfleitung 81, und zwar jeweils zwischen dem Abzweigpunkt der Bypassleitung 100 bzw. 200 und dem Dampfeinlass 54 der Hochdruckstufe 20a bzw. dem Dampfeinlass 60 der Mitteldruckstufe 20a.

In ist ein Absperrventil 202 eingebaut, mit welchem sie sich absperren lässt. Ebenso befindet sich ein Absperrventil 104 in der Dampfleitung 53, und zwar zwischen dem Abzweigpunkt der Bypassleitung 100 und dem Dampfeinlass 54 der Hochdruckstufe 20a der Dampfturbine 20.

Die Bypassleitung 100 und die Absperrventile 102, 104 dienen dazu, während des Anfahrens der Gas- und Dampfturbinenanlage 1 einen Teil des Dampfes zur Umgehung der Dampfturbine 2 umzuleiten.

Nachfolgend wird ein Ausführungsbeispiel für das erfindungsgemäße Verfahren zum Starten einer Gas- und Dampfturbinenanlage anhand der mit Bezug auf Figur 1 beschriebenen Anlage 1 beschrieben.

Zu Beginn des Verfahrens wird die Gasturbinenanlage 1a gestartet und das aus ihr austretende Arbeitsmedium AM dem Abhitzedampferzeuger 30 über einen Eingang 30a zugeführt. Das entspannte Arbeitsmedium AM durchströmt den Abhitzedampferzeuger 30 und verlässt diesen über einen Ausgang 30b in Richtung auf einen in Figur 1 nicht dargestellten Kamin. Beim Durchströmen des Abhitzedampferzeugers 30 wird Wärme vom Arbeitsmedium AM an das Wasser beziehungsweise den Dampf im Wasser-Dampf-Kreislauf übertragen.

Nach dem Starten der Gasturbinenanlage führt die Abhitze des Arbeitsmediums im Abhitzedampferzeuger 30 zum Beginn der Dampfproduktion im Dampfsystem.

In dieser frühen Phase des Startvorgangs sind die Absperrventile 102 und 104 bzw. 202 und 204 derart eingestellt, dass nur ein kleiner Teil des erzeugten Dampfes durch die Bypassleitungen 100, 200 strömt und der größte Teil des Dampfes bereits in dieser Phase des Startvorganges der Dampfturbine 20 zugeführt wird. Der der Dampfturbine 20 zugeführte Teil des Dampfes beschleunigt die Dampfturbine und wärmt diese vor, sofern der Dampf heißer als das Material der Turbine und der Dampfleitungen ist.

Da nur wenig Dampf über die Mitteldruckumleitung 200 direkt zum Kondensator 26 strömt, führt der beim Beschleunigen und Vorwärmen der Dampfturbine 20 nicht genutzte Teil der Abwärme zu einer Drucksteigerung im Dampfsystem. Im weiteren Verlauf des Startvorgangs steigt der Dampfdruck im Dampfsystem daher kontinuierlich an, wodurch die Dampfproduktion im Abhitzedampferzeuger verringert wird. Dies führt zu einer Verringerung des Wärmeeintrags in den Kondensator 26 und bewirkt, dass die ohnehin nicht voll geöffneten Absperrventil 102 und 202 im Vergleich zu Startverfahren nach Start der Technik rasch geschlossen werden können.

Nach dem Starten der Gasturbinenanlage 1a wird die Last der Gasturbinenanlage vorzugsweise mit maximaler Lastrampe solange erhöht, bis die Grundlast erreicht ist.

Falls zu Beginn der Dampfeinleitung in die Dampfturbine 20 die Dampftemperatur unter der Materialtemperatur der Turbine 20 liegt, so wird während des Hochfahrens der Last der Gasturbinenanlage die Dampftemperatur ständig steigen und relativ bald die Materialtemperatur der Dampfturbine und der zu ihr führenden Leitungen übersteigen. Falls der rasche Anstieg von einer relativ kühlen Temperatur der Turbinenbauteile zu einer hohen Temperatur aufgrund des Anfahrens der Gasturbinenanlage mit maximaler Lastrampe eine gewisse, vorgegebene Grenze der thermischen Spannungen im Material übersteigen würde, kann die Leistung der Gasturbinenanlage auch mit einer geringeren Rampe als der maximalen Lastrampe gesteigert werden, so dass die Dampftemperaturen langsamer steigen.

Da im erfindungsgemäßen Startverfahren die Bypassleitungen 100, 200 frühzeitig geschlossen werden und die Gas- und Dampfturbinenanlage 1 bereits während des Hochfahrens der Gasturbinenanlage 1a auf Grundlast in den Gas- und Dampfturbinenbetrieb umgeschaltet wird, ist bei Erreichen der Gasturbinengrundlast der Startvorgang beendet.

Selbst wenn bei Erreichen der Gasturbinengrundlast die Dampfturbinenlast lediglich eine Größenordnungen von etwa 80-90 % erreichen sollte, gilt der Anfahrvorgang gemäß der Definition, dass der Anfahrvorgang bei Erreichen der Grundlast der Gasturbinenanlage und geschlossenen Bypassleitungen beendet ist, als abgeschlossen. Je nach dynamischem Verhalten des Abhitzedampferzeugers wird über einige Minuten eine weitere Drucksteigerung erfolgen, die nach ca. 10-20 weiteren Minuten angeschlossen sein wird. Entsprechend wird sich die Dampfmenge erhöhen, und je nach Dampftemperatur werden Dampfturbinenleitungen von über 95 % erzielt.

Das erfindungsgemäße Startverfahren wurde anhand einer Gas- und Dampfturbinenanlage mit einem Wasser-Dampf-Kreislauf beschrieben, der lediglich eine Druckstufe aufweist. Es sei an dieser Stelle jedoch darauf hingewiesen, dass das erfindungsgemäße Verfahren auch bei Gas- und Dampfturbinenanlagen zur Anwendung kommen kann, die mehr als eine Druckstufe im Wasser-Dampf-Kreislauf aufweisen. Eine Gas- und Dampfturbinenanlage mit drei Druckstufen, nämlich einer Hochdruckstufe, einer Mitteldruckstufe und einer Niederdruckstufe im Wasser-Dampf-Kreislauf, für die das erfindungsgemäße Startverfahren ebenfalls zur Anwendung kommen kann, ist beispielsweise in DE 100 04 178 C1 beschrieben, auf die bezüglich der Ausgestaltung einer Gas- und Dampfturbinenanlage mit mehreren Druckstufen Bezug genommen wird.

## Patentansprüche

1. Verfahren zum Starten einer Gas- und Dampfturbinenanlage (1), die eine wenigstens eine Gasturbine umfassende Gasturbinenanlage (1a) sowie eine wenigstens eine Dampfturbine (20) und wenigstens ein Dampfsystem umfassende Dampfturbinenanlage (1b) aufweist und in der die Abhitze eines in der Gasturbine (2) entspannenden Arbeitsmediums (AM) dem Dampfsystem zum Erzeugen von die Dampfturbine (20) antreibendem Dampf zugeführt wird, wobei beim Starten die Gasturbine (2) gestartet wird, bevor die Dampfturbine (20) gestartet wird, wobei die Dampfturbine (20) bereits bei Vorliegen des ersten Dampfes im Dampfsystem gestartet und mit Dampf beaufschlagt wird, **dadurch gekennzeichnet, dass** die Gasturbinenanlage (1a) während des gesamten Startvorganges eine Laststeigerung mit maximaler Lastrampe erfährt.

2. Verfahren nach Anspruch 1, **dadurch gekennzeichnet, dass** beim Startvorgang eine Abstimmung des Dampfsystems derart erfolgt, dass die Dampftemperatur während des Beschleunigens der Dampfturbine (20) mit einem geringen Gradienten steigt.

3. Verfahren nach Anspruch 1 oder 2, **dadurch gekennzeichnet, dass** beim Startvorgang eine Abstimmung des Dampfsystems derart erfolgt, dass der Dampfdruck kontinuierlich steigt.

4. Verfahren nach Anspruch 3, **dadurch gekennzeichnet, dass** die Abstimmung mittels wenigstens einer Dampfumleitstation (100, 102, 200, 202) des Dampfsystems erfolgt, indem die Dampfumleitstation (100, 102, 200, 202) nur so weit geöffnet wird, dass mit einem Teil der Abwärme des Arbeitsmediums eine zum Beschleunigen und/oder Synchronisieren der Dampfturbine (20) benötigte Mindestdampfmenge erzeugt und mit dem restliche Teil der Abwärme des Arbeitsmediums eine Drucksteigerung im Dampfsystem herbeigeführt wird.

5. Verfahren nach Anspruch 3, **dadurch gekennzeichnet, dass** kleine zu einer Umgehung der Dampfturbine (20) führende Umleitungsstation (100, 102, 200, 202) im Dampfsystem geöffnet wird.

6. Verfahren nach einem der Ansprüche 1 bis 5, **dadurch gekennzeichnet, dass** die Laststeigerung beibehalten wird, bis die Grundlast der Gasturbinenanlage (1a) erreicht ist.

7. Verfahren nach einem der Ansprüche 1 bis 6, **dadurch gekennzeichnet, dass** die Gas- und Dampfturbinenanlage (1) während der Laststeigerung in den Gas- und Dampfturbinenbetrieb umgeschaltet wird.

## Claims

1. Method for starting up a gas and steam turbine system (1) which has a gas turbine system (1a) comprising at least one gas turbine as well as a steam turbine system (1b) comprising at least one steam turbine (20) and at least one steam system and in which the waste heat of a working medium (AM) expanding in the gas turbine (2) is supplied to the steam system for the purpose of generating steam driving the steam turbine (20), wherein at startup time the gas turbine (2) is started before the steam turbine (20) is started, wherein the steam turbine (20) is started up already when the first steam is present in the steam system and is impinged upon by steam, **characterised in that**
the gas turbine system (1a) experiences a load increase at maximum load ramp during the entire startup operation.

2. Method according to claim 1, **characterised in that** during the startup operation the steam system is tuned in such a way that the steam temperature increases at a low gradient during the acceleration of the steam turbine (20).

3. Method according to claim 1 or 2, **characterised in that** during the startup operation the steam system is tuned in such a way that the steam pressure increases continuously.

4. Method according to claim 3, **characterised in that** the steam system is tuned by means of at least one steam diverter station (100, 102, 200, 202) of the steam system **in that** the steam diverter station (100, 102, 200, 202) is opened only so wide that a minimum steam quantity required for accelerating and/or synchronising the steam turbine (20) is generated by means of a part of the waste heat of the working medium and an increase in pressure is produced in the steam system by means of the remainder of the waste heat of the working medium.

5. Method according to claim 3, **characterised in that** no diverter station (100, 102, 200, 202) leading to a bypassing of the steam turbine (20) is opened in the steam system.

6. Method according to one of claims 1 to 5, **characterised in that** the increase in load is maintained until the base load of the gas turbine system (1a) has been reached.

7. Method according to one of claims 1 to 6, **characterised in that** the gas and steam turbine system (1) is switched over into the gas and steam turbine operating mode during the increase in load.

## Revendications

1. Procédé de mise en marche d'une installation (1) de turbine à gaz et de turbine à vapeur, qui a une installation (1a) de turbine à gaz comprenant au moins une turbine à gaz, ainsi qu'une installation (1b) de turbine à vapeur, comprenant au moins une turbine (20) à vapeur et au moins un système de vapeur et dans laquelle la chaleur perdue d'un fluide (AM) de travail détendu dans la turbine (2 ) à gaz est envoyée au système de vapeur pour produire de la vapeur entraînant la turbine ( 20 ) à vapeur, dans lequel, à la mise en marche, on met en marche la turbine ( 2 ) à gaz avant de mettre en marche la turbine ( 20 ) à vapeur, dans lequel on met en marche la turbine ( 20 ) à vapeur et on l'alimente en vapeur dès la présence de la première vapeur dans le système de vapeur,
**caractérisé en ce que**
l'installation ( 1a ) de turbine à gaz subit pendant toute l'opération de mise en marche une augmentation de charge à une rampe de charge maximum.

2. Procédé suivant la revendication 1, **caractérisé en ce que**, pendant l'opération de démarrage, il s'effectue une adaptation du système de vapeur, de manière à ce que la température de la vapeur s'élève suivant un gradient petit pendant l'accélération de la turbine ( 20 ) à vapeur.

3. Procédé suivant la revendication 1 ou 2, **caractérisé en ce que**, pendant l'opération de démarrage, il s'effectue une adaptation du système de vapeur, de manière à ce que la pression de la vapeur s'élève continuellement.

4. Procédé suivant la revendication 3, **caractérisé en ce que** l'adaptation s'effectue au moyen d'au moins un poste ( 100, 102, 200, 202 ) de dérivation de la vapeur du système de vapeur, par le fait que le poste ( 100, 102, 200, 202 ) de dérivation de la vapeur n'est ouvert qu'autant qu'il est produit, par une partie de la chaleur perdue du fluide de travail, une quantité de vapeur minimum nécessaire à l'accélération ou/et à la synchronisation de la turbine ( 20 ) à vapeur et qu'il est provoqué, par la partie restante de la chaleur perdue du fluide de travail, une élévation de la pression dans le système de vapeur.

5. Procédé suivant la revendication 3, **caractérisé en ce que** l'on n'ouvre pas dans le système de vapeur de poste ( 100, 102, 200, 202 ) de dérivation conduisant à un contournement de la turbine ( 20 ) à vapeur.

6. Procédé suivant l'une des revendications 1 à 5, **caractérisé en ce que** l'on conserve l'élévation de charge jusqu'à ce que la charge de base de l'installation ( 1a ) de turbine à gaz soit atteinte.

7. Procédé suivant l'une des revendications 1 à 6, **caractérisé en ce que**, pendant l'augmentation de charge, on fait passer l'installation ( 1 ) de turbine à gaz et de turbine à vapeur en le fonctionnement en turbine à gaz et en turbine à vapeur.
